# EUROPEAN PATENT APPLICATION

(11) **EP 3 396 369 A1**
(43) Date of publication of application: **31.10.2018**
(21) Application number: 16879285.1
(22) Date of filing: 19.12.2016
(51) Int. Cl.: G01N 29/06, G01N 29/04, G01N 29/22, G01N 29/265

(54) **CRACK MEASUREMENT DEVICE AND METHOD**

(30) Priority: 24.12.2015 KR 20150186637
(71) Applicant: POSCO, Nam-gu Pohang-si, Gyeongsangbuk-do 37859 (KR)
(72) Inventor: CHOI, Sang-Woo, Pohang-si, Gyeongsangbuk-do 37877 (KR); HONG, Jae-Suk, Pohang-si, Gyeongsangbuk-do 37877 (KR); KIM, Kwan-Tae, Pohang-si, Gyeongsangbuk-do 37877 (KR); SHIN, Nam-Ho, Pohang-si, Gyeongsangbuk-do 37877 (KR); CHOI, Tae-Hwa, Pohang-si, Gyeongsangbuk-do 37877 (KR)
(74) Representative: Potter Clarkson LLP
(86) International application number: PCT/KR2016/014906
(87) International publication number: WO 2017/111418

(57) **Abstract**

According to one embodiment of the present invention, a crack measurement device and a crack measurement method are provided. The crack measurement device according to one embodiment of the present invention comprises: an ultrasound sensor for emitting a first ultrasound wave, to be focused on the bottom surface of an object to be inspected, in the vertical direction of the bottom surface of the object to be inspected, and receiving a reflected wave reflected from the bottom surface of the object to be inspected; and a monitoring unit for providing information on cracks on the basis of the intensity of the reflected wave.

## Description

### [Technical Field]

The present disclosure relates to a crack measurement device and method of measuring a crack generated in a structure.

### [Background Art]

Various attempts to measure cracks generated in a structure using ultrasonic waves have been made. A general method of measuring cracks generated in a structure using ultrasonic waves is to measure the cracks by making the ultrasonic waves incident into a structure to be inspected and receiving reflected waves.

However, according the conventional method, cracks formed in various directions in a rear surface of the structure may not be accurately sensed, and even when the cracks are distributed have a curved or irregular shape, the cracks may not be accurately sensed.

### [Disclosure]

### [Technical Problem]

An aspect of the present disclosure is to provide a crack measurement device capable of more accurately providing measurement information on cracks including vertical cracks.

An aspect of the present disclosure is to provide a crack measurement method capable of more accurately providing measurement information on cracks including vertical cracks.

### [Technical Solution]

According to an aspect of the present disclosure, a crack measurement device includes: an ultrasonic sensor irradiating a first ultrasonic wave in a direction perpendicular to a bottom surface of an object to be inspected, so as to be focused on the bottom surface of the object to be inspected and receiving a reflected wave, reflected from the bottom surface of the object to be inspected; and a monitoring unit providing information on a crack on the basis of intensity of the reflected wave.

The ultrasonic sensor may include: a transmitter including a plurality of piezoelectric elements disposed in a concave structure and irradiating the first ultrasonic wave; a receiver receiving the reflected wave; and a partition wall disposed between the transmitter and the receiver and having sound absorption properties.

The crack measurement device may further include a moving unit moving the ultrasonic sensor two-dimensionally on a surface of the object to be inspected and outputting position information indicating a position of the ultrasonic sensor to the monitoring unit.

The monitoring unit may visually display a two-dimensional distribution of the crack of the object to be inspected using the intensity of the reflected wave and the position information.

The moving unit may be attached to the object to be inspected or a structure supporting the object to be inspected. In this case, the crack measurement device may further include a ferromagnetic substance attaching the moving unit to the object to be inspected or the structure supporting the object to be inspected, further include an adsorber adsorbed to the object to be inspected or the structure supporting the object to be inspected in a vacuum manner to attach the moving unit to the object to be inspected or the structure supporting the object to be inspected, or further include a bolt fastened to the object to be inspected or the structure supporting the object to be inspected by a mechanical fastening method to attach the moving unit to the object to be inspected or the structure supporting the object to be inspected.

The crack measurement device may further include a couplant supply device supplying a couplant between the ultrasonic sensor and the object to be inspected.

The couplant supply device may include: a tank containing the couplant therein; a pump continuously supplying the couplant; a tube carrying the couplant supplied from the pump to a position in which the ultrasonic sensor is installed; and a nozzle spraying the couplant carried through the tube and installed in the ultrasonic sensor.

The ultrasonic sensor may additionally transmit a second ultrasonic wave in a direction forming an acute angle with respect to the bottom surface of the object to be inspected, so as to be diffused toward the bottom surface of the object to be inspected, and receive a diffracted wave of the second ultrasonic wave diffracted by the crack.

The monitoring unit may extract and provide information on a height of the crack using a time at which the diffracted wave is received.

The ultrasonic sensor may include: a first transmitter transmitting the first ultrasonic wave; a second transmitter disposed to be spaced apart from the first transmitter and transmitting the second ultrasonic wave; and a receiver disposed to correspond to the first transmitter and receiving the reflected wave and the diffracted wave.

The ultrasonic sensor may further receive a diffracted wave of the first ultrasonic wave diffracted by the crack.

The ultrasonic sensor may include: a transmitter transmitting the first ultrasonic wave; a first receiver disposed to correspond to the transmitter and receiving the reflected wave; and a second receiver disposed to be spaced apart from the transmitter and receiving the diffracted wave.

According to another aspect of the present disclosure, a crack measurement method includes: irradiating a first ultrasonic wave in a direction perpendicular to a bottom surface of an object to be inspected, so as to be focused on the bottom surface of the object to be inspected; receiving a reflected wave, reflected from the bottom surface of the object to be inspected; and providing information on a crack on the basis of intensity of the reflected wave.

In the providing of the information, two-dimensional information on a distribution of the crack of the object to be inspected may be visually displayed.

The crack measurement method may further include irradiating a second ultrasonic wave in a direction forming an acute angle with respect to the bottom surface of the object to be inspected, so as to be diffused toward the bottom surface of the object to be inspected; and receiving a diffracted wave of the second ultrasonic wave diffracted by the crack.

In the providing of the information, information on a height of the crack may be additionally provided using a time at which the diffracted wave is received.

The crack measurement method may further include receiving a diffracted wave of the first ultrasonic wave diffracted by the crack.

### [Advantageous Effects]

As set forth above, according to the crack measurement device and the crack measurement method according to an exemplary embodiment in the present disclosure, a distribution of defects may be easily recognized, vertical cracks may be determined regardless of a distribution direction of the cracks, a two-dimensional distribution of the vertical cracks may be easily confirmed, and a distribution of the vertical cracks may be visualized.

### [Description of Drawings]

FIGS. 1 is a view for describing a principle of a crack measurement device and a crack measurement method according to an exemplary embodiment in the present disclosure.
FIG. 2 is a view two-dimensionally illustrating an amplitude of reflected waves sensed by an ultrasonic sensor depending on a position of the ultrasonic sensor as color information.
FIGS. 3 is a schematic view illustrating an ultrasonic sensor according to an exemplary embodiment in the present disclosure.
FIG. 4 is a schematic view illustrating a crack measurement device according to an exemplary embodiment in the present disclosure.
FIG. 5 is a schematic view illustrating an ultrasonic sensor according to an exemplary embodiment in the present disclosure.
FIG. 6 is a schematic view illustrating a structure of a transmitter irradiating ultrasonic waves in the ultrasonic sensor according to an exemplary embodiment in the present disclosure illustrated in FIG. 5.
FIG. 7 is a view illustrating a distribution of cracks and heights of the cracks visualized using the crack measurement device and the crack measurement method according to an exemplary embodiment in the present disclosure.

### [Best Mode for Invention]

Hereinafter, a crack measurement device and a crack measurement method according to an exemplary embodiment in the present disclosure will be described with reference to the drawings.

In a blast furnace steel plate, which is a large, high-temperature, and high-pressure container formed of a thick plate, a plurality of holes are drilled in order to supply a coolant of a cooling apparatus, such that various stress concentration portions exist, and high heat in the blast furnace steel plate, loads of a fuel and a raw material in the blast furnace steel plate, and a mechanical load by a gas pressure variously act, such that vertical cracks are generated in various directions in the blast furnace steel plate. In a structure formed of a thick material such as the thick plate, or the like, in many cases, it is impossible to confirm cracks generated in one surface of the structure on the other surface of the structure. Particularly, in a blast furnace, in many cases, the cracks are grown from an inner surface of the blast furnace due to a reducing gas, high heat, and the like, in the blast furnace. However, the cracks do not appear on a surface portion, and a work environment in which the cracks generated and grown in the various directions may be inspected in detail and found is not provided, such that technology capable of conveniently detecting vertical cracks is required. In order to detect internal cracks at an appropriate time before the internal cracks arrive at a surface and designate a repair region, a distribution of the cracks need to be confirmed, and a method of confirming the distributions of the cracks need not to be complicated.

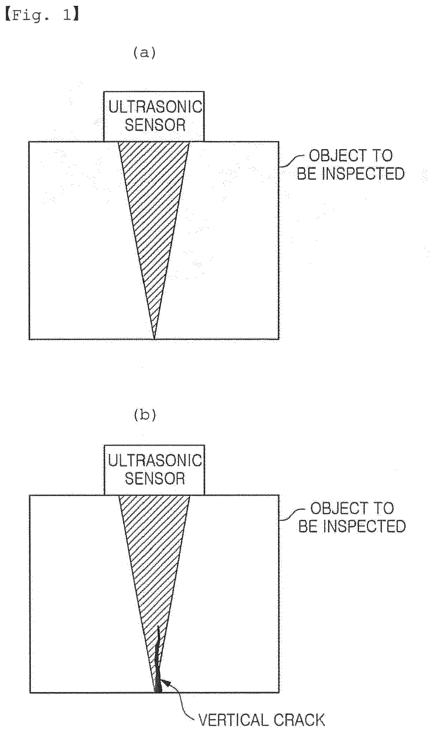

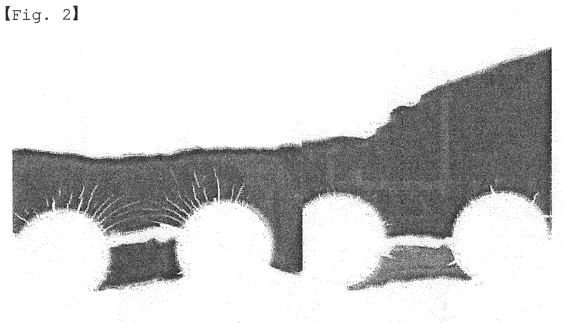

FIGS. 1 are views for describing a principle of a crack measurement device and a crack measurement method according to an exemplary embodiment in the present disclosure, and FIG. 2 is a view two-dimensionally illustrating an amplitude of reflected waves sensed by an ultrasonic sensor depending on a position of the ultrasonic sensor as color information.
(a) of FIG. 1 illustrates a case in which an ultrasonic sensor irradiates ultrasonic waves to a normal region (that is, a region in which cracks do not exist) of an object to be inspected, and (b) of FIG. 1 illustrates a case in which the ultrasonic sensor irradiates ultrasonic waves to a region in which vertical cracks exist in an object to be inspected. Portions hatched by oblique lines in (a) and (b) of FIG. 1 indicate regions to which the ultrasonic waves are irradiated.

As illustrated in (a) and (b) of FIG. 1, when ultrasonic beams are vertically irradiated to be focused on a rear surface or a bottom surface, that is, the other surface of the object to be inspected opposing one surface of the object to be inspected on which the ultrasonic sensor is disposed, a signal reflected from a narrow area of the rear surface may be received.

As illustrated in (a) of FIG. 1, when focused ultrasonic waves are irradiated to the normal region, that is, the region in which the cracks do not exist, the focused ultrasonic waves are reflected from the bottom surface, and the ultrasonic sensor thus receives ultrasonic waves having a high amplitude.

As illustrated in (b) of FIG. 1, when focused ultrasonic waves are vertically irradiated to the region in which the vertical cracks exist, the ultrasonic waves are scattered or diffracted due to interference with the cracks, such that an amplitude of the ultrasonic waves reflected from the bottom surface is rapidly decreased, and the ultrasonic sensor thus receives ultrasonic waves having a low amplitude.

Therefore, when a two-dimensional position of the ultrasonic sensor and an amplitude of reflected waves (the ultrasonic waves reflected from the rear surface) received by the ultrasonic sensor in the corresponding position are used, it may be determined whether or not the cracks exist in the object to be inspected, and positions of the cracks may be determined.

That is, when the focused ultrasonic waves are vertically irradiated to a structure by the ultrasonic sensor while moving the ultrasonic sensor above the object to be inspected and an amplitude of the reflected waves received by the ultrasonic sensor depending on the two-dimensional position of the ultrasonic sensor is represented as color information, a two-dimensional distribution diagram of the cracks as illustrated in FIG. 2 may be obtained.

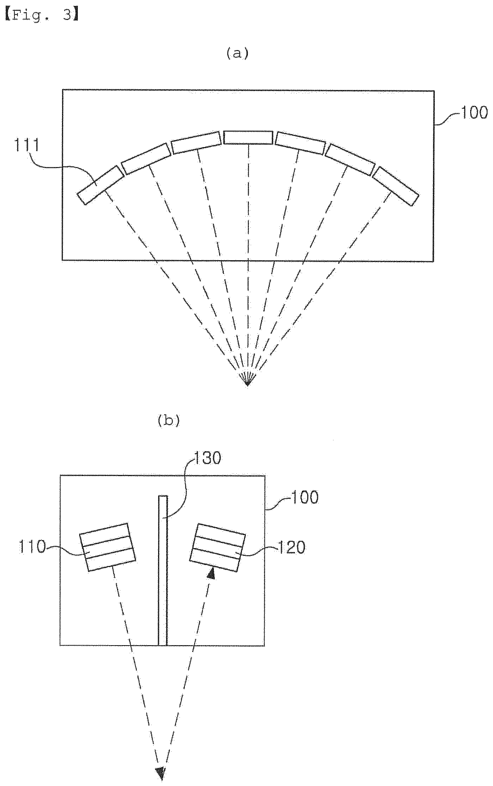

FIGS. 3 are schematic views illustrating an ultrasonic sensor according to an exemplary embodiment in the present disclosure, wherein (a) of FIG. 3 is a front view of the ultrasonic sensor and (b) of FIG. 3 is a side view of the ultrasonic sensor. As illustrated in FIG. 3, the ultrasonic sensor 100 according to an exemplary embodiment in the present disclosure may include a transmitter 110, a receiver 120, and a partition wall 130. In addition, the transmitter 110 may include a plurality of piezoelectric elements 111.

The ultrasonic sensor 100 may be in contact with one surface of the object to be inspected, irradiate ultrasonic waves so that the ultrasonic waves are focused on the other surface of the object to be inspected, and irradiate the ultrasonic waves in a direction perpendicular to the other surface of the object to be inspected. The ultrasonic sensor 100 may have a surface formed as a plane in order to be in contact with one surface of the object to be inspected.

Each of the plurality of piezoelectric elements 111 generates ultrasonic waves. As illustrated in (a) of FIG. 3, the plurality of piezoelectric elements 111 are disposed in a concave structure within the ultrasonic sensor 100 while forming a sensor array. That is, according to an exemplary embodiment in the present disclosure, the plurality of piezoelectric elements 111 are disposed in the concave structure within the ultrasonic sensor 100, such that the ultrasonic waves may be physically focused on the other surface of the object to be inspected.

As illustrated in (b) of FIG. 3, the ultrasonic sensor 100 may have a transmission/reception separation type structure. That is, the ultrasonic sensor 100 may include the transmitter 110, the receiver 120 separated from the transmitter 110, and the partition wall 130 disposed between the transmitter 110 and the receiver 120.

The transmitter 110 may transmit the focused ultrasonic waves. In detail, in a case in which the ultrasonic sensor 110 is disposed to be in contact with a surface of the object to be inspected, the transmitter 110 may transmit the ultrasonic waves focused on a bottom surface of the object to be inspected. The transmitter 110 may include the plurality of piezoelectric elements 111 disposed in the concave structure, as illustrated in (a) of FIG. 3.

The receiver 120 receives reflected waves reflected from the bottom surface of the object to be inspected.

The partition wall 130 has sound absorption properties. That is, the partition wall 130 has sound absorption properties so that the ultrasonic waves generated by the transmitter 110 are not received by the receiver 120. In addition, since the ultrasonic sensor 100 includes the partition wall 130, surface reflected waves may not be received by the receiver 120. Therefore, the ultrasonic sensor 100 may be disposed at a distance close to the surface of the object to be inspected. For example, the ultrasonic sensor 100 may be disposed to be in contact with the surface of the object to be inspected.

The ultrasonic sensor 100 according to an exemplary embodiment in the present disclosure illustrated in (a) and (b) of FIG. 3 may obtain a focusing effect without applying a water immersion method, and may easily receive bottom reflected wave signals without setting a large distance between the ultrasonic sensor and the object to be inspected. Therefore, the ultrasonic sensor 100 according to an exemplary embodiment in the present disclosure may sense cracks in the object to be inspected even in a case in which the object to be inspected is too large to be put in a water tank and it is difficult to apply a water jet to the object to be inspected.

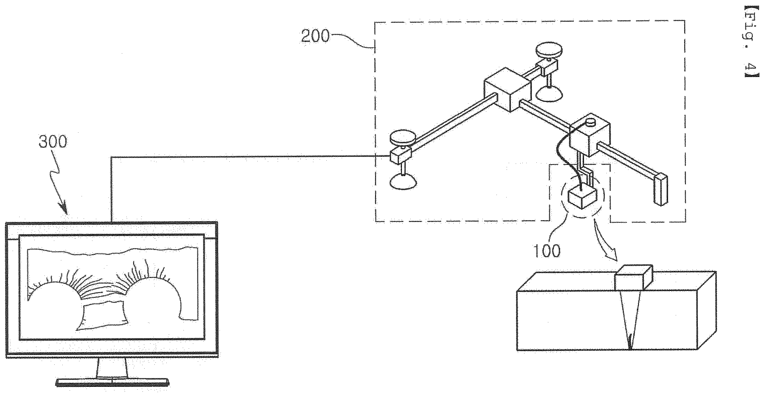

FIG. 4 is a schematic view illustrating a crack measurement device according to an exemplary embodiment in the present disclosure. The crack measurement device according to an exemplary embodiment in the present disclosure may include an ultrasonic sensor 100, a moving unit 200, and a monitoring unit 300.

The ultrasonic sensor 100 is in contact with one surface of the object to be inspected, irradiates the ultrasonic waves focused on the other surface of the object to be inspected in a direction perpendicular to the other surface of the object to be inspected, receives the reflected waves reflected from the other surface of the object to be inspected, and outputs sensed signals corresponding to the received reflected waves.

The moving unit 200 moves the ultrasonic sensor 100 in two axis directions on one surface of the object to be inspected, and outputs a position signal indicating a position of the ultrasonic sensor 100. The moving unit 200 may output the position signal as a two axis coordinate value of the ultrasonic sensor 100. The moving unit 200 may be moved with the hand in a manual manner and output the position signal, which is the coordinate value of the ultrasonic sensor 100, and may automatically move the ultrasonic sensor 100 using various driving forces such as a step motor, a direct current (DC) motor, and the like, so that the entirety or a portion of the other surface of the object to be inspected is scanned by the ultrasonic sensor 100.

The moving unit 200 may be attached to the object to be inspected, a structure supporting the object to be inspected, or the like. To this end, the moving unit 200 may include a ferromagnetic substance or include an adsorber adsorbed in a vacuum manner. Alternatively, the moving unit 200 may be attached to the object to be inspected or a structure supporting the object to be inspected by a mechanical fastening method using a bolt, or the like.

The monitoring unit 300 may input the sensed signal from the ultrasonic sensor 100, input the position signal from the moving unit 200, and display whether or not cracks exist in the object to be inspected, positions of the cracks, or the like, on the basis of the sensed signal and the position signal. For example, the monitoring unit 300 may extract an amplitude value of a bottom reflected signal reflected from the bottom surface of the object to be inspected from the sensed signal and display the amplitude value on a two dimensional coordinate determined by the position signal to display a distribution of the cracks in a two-dimensional distribution image form. A method of obtaining a two-dimensional image from the received signals may be implemented by a method of obtaining an amplitude image by a general ultrasonic C-scan method.

Although not illustrated, the crack measurement device according to an exemplary embodiment in the present disclosure may be implemented by a portable device using a battery as a power supply.

In addition, although not illustrated, the crack measurement device according to an exemplary embodiment in the present disclosure may further include a couplant supply device continuously supplying a couplant between the ultrasonic sensor 100 and the object to be inspected. The couplant supply device may include a tank containing the couplant therein, a pump continuously supplying the couplant, and a tube receiving the couplant and spraying couplant to the ultrasonic sensor 100 and the object to be inspected. In order to spray the couplant, a nozzle connected to the tube may be installed in the ultrasonic sensor 100. That is, in order to detect the cracks, or the like, using the ultrasonic sensor, the couplant is required, and the crack measurement device according to an exemplary embodiment in the present disclosure may further include the couplant supply device described above to supply the ultrasonic sensor 100 and the object to be inspected. The couplant may be a liquid such as water.

Alternatively, a gel-type general ultrasonic couplant may be thickly and uniformly applied to a surface of an inspection object region of the object to be inspected without separately supplying the couplant, resulting in prevention of creation of an air layer between the ultrasonic sensor 100 and a contact surface of the object to be inspected.

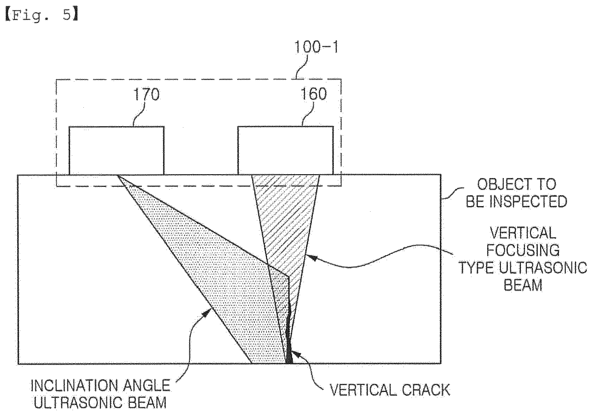

FIG. 5 is a schematic view illustrating an ultrasonic sensor according to an exemplary embodiment in the present disclosure. The ultrasonic sensor 100-1 according to an exemplary embodiment in the present disclosure may include a first sensor 160 and a second sensor 170.

The first sensor 160 may generate first ultrasonic waves focused on a bottom surface of an object to be inspected. The first ultrasonic waves may be vertically irradiated to the bottom surface of the object to be inspected. A function and an operation of the first sensor 160 may be easily understood with reference to the description of FIGS. 1 through 3.

The second sensor 170 may transmit second ultrasonic waves widely spread up to tips of vertical cracks. The second ultrasonic waves may be irradiated to form an acute angle with respect to the bottom surface of the object to be inspected. That is, a direction of the second ultrasonic waves transmitted by the second sensor 170 may be close to a focus direction of the first sensor 160, and the second ultrasonic waves may be sufficiently spread up to the tips of the cracks. The second sensor 170 may receive only components diffracted by the cracks in the first ultrasonic waves irradiated by the first sensor 160, without transmitting the second ultrasonic waves.

Although not illustrated, both of the first sensor 160 and the second sensor 170 may include a transmitter generating ultrasonic waves and a receiver receiving reflected waves reflected from the bottom surface of an object to be inspected. Alternatively, one of the first sensor 160 and the second sensor 170 may include only the transmitter and may not include the receiver. Alternatively, one of the first sensor 160 and the second sensor 170 may include only the receiver and may not include the transmitter.

In addition, as illustrated in (a) and (b) of FIG. 3, a partition wall having sound absorption properties may be disposed between the transmitter and the receiver in the first sensor 160 and/or the second sensor 170.

Further, the ultrasonic sensor 100-1 may also have a form in which the first sensor 160 and the second sensor 170 are coupled to each other. That is, the ultrasonic sensor according to an exemplary embodiment in the present disclosure may also be implemented in a form in which it includes a first transmitter generating the first ultrasonic waves described above, a second transmitter generating the second ultrasonic waves described above, and one receiver. In this case, a partition wall may be disposed between the first and second transmitters and the receiver.

When the ultrasonic sensor according to an exemplary embodiment in the present disclosure illustrated in FIG. 5 is used, heights of the vertical cracks as well as positions of the vertical cracks may be determined. In this case, the second sensor 170 may be used to measure the heights of the vertical cracks.

In detail, when the first sensor 160 is positioned above vertical crack portions confirmed using the first sensor 160, the second sensor 170 irradiates the second ultrasonic waves. Then, the first sensor 160 may receive diffracted waves of the second ultrasonic waves diffracted at the cracks, particularly, the tips of the cracks, an arrival time of the diffracted waves may be determined, and positions of the tips of the cracks may be calculated from the arrival time to detect the heights of the cracks.

Alternatively, the first sensor 160 may transmit the first ultrasonic waves, the second sensor 170 may receive components propagated in an inclination direction toward the second sensor 170 in waves diffracted at the cracks, particularly, the tips of the cracks, an arrival time of the components may be determined, and positions of the tips of the cracks may be calculated to detect the heights of the cracks.

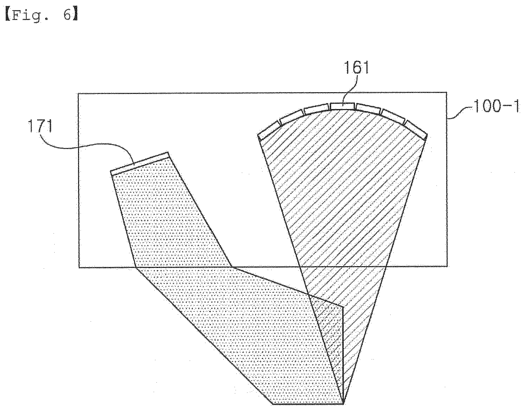

FIG. 6 is a schematic view illustrating a structure of a transmitter irradiating ultrasonic waves in the ultrasonic sensor according to an exemplary embodiment in the present disclosure illustrated in FIG. 5. The ultrasonic sensor 100-1 according to an exemplary embodiment in the present disclosure includes a first sensor including a first transmitter 161 and a second sensor including a second transmitter 171. That is, the ultrasonic sensor 100-1 according to an exemplary embodiment in the present disclosure may be implemented by an integrated sensor in a manner as illustrated in FIG. 6.

The first transmitter 161 vertically irradiates first ultrasonic waves focused on the bottom surface of the object to be inspected to the bottom surface of the object to be inspected. The first transmitter 161 may be an array type transmitter in which a plurality of piezoelectric elements are disposed in a concave structure, as illustrated in FIG. 6.

The second transmitter 171 irradiates second ultrasonic waves having a spread form so that the second ultrasonic wave forms an acute angle with respect to the bottom surface of the object to be inspected. The second transmitter 171 may be spaced apart from the first transmitter 161 and be disposed to have an inclination angle, as illustrated in FIG. 6.

The ultrasonic sensor 100-1 illustrated in FIGS. 5 and 6 may obtain a two-dimensional distribution of the vertical cracks and height information of the vertical cracks by alternately performing transmission and reception, and may visually display the two-dimensional distribution of the vertical cracks.

For example, in a case in which the first ultrasonic waves are irradiated by the first transmitter 161 and a first receiver (not illustrated) corresponding to the first transmitter 161 receives the reflected waves reflected from the bottom surface of the object to be inspected, the second transmitter 171 waits, and when inspection by the first transmitter 161 and the first receiver (not illustrated) are completed and the first ultrasonic waves disappears, the second transmitter 171 irradiates the second ultrasonic waves, and the first receiver (not illustrated) corresponding to the first transmitter 161 may receive the ultrasonic waves diffracted at the tips of the cracks. The first receiver (not illustrated) may be disposed adjacent to the first transmitter, and a partition wall may be disposed between the first receiver and the first transmitter.

Alternatively, during a period in which the first ultrasonic waves are irradiated by the first transmitter 161 and the first receiver (not illustrated) corresponding to the first transmitter 161 receives the reflected waves reflected from the bottom surface of the object to be inspected, a second receiver (not illustrated) corresponding to the second transmitter 171 may receive the ultrasonic waves diffracted at the tips of the cracks. That is, during a period in which the first sensor including the first transmitter 161 and the first receiver (not illustrated) is operated, the second sensor including the second receiver (not illustrated) may also be operated. The second receiver may be disposed to be spaced apart from the first sensor including the first transmitter 161 and the first receiver (not illustrated), and may be disposed to form an acute angle with respect to the bottom surface of the object to be inspected.

That is, the ultrasonic sensor according to an exemplary embodiment in the present disclosure may detect the distribution of the cracks regardless of a distribution direction of the cracks, using the first ultrasonic waves focused on the bottom surface of the object to be inspected and vertically irradiated to the bottom surface of the object to be inspected. However, in a case of using only the first ultrasonic waves, an error may be large in detecting the heights of the cracks. Therefore, the heights of the cracks may be more accurately determined by using the first ultrasonic waves irradiated in a spread form and irradiated at the acute angle with respect to the bottom surface of the object to be inspected or receiving the ultrasonic waves diffracted in a direction forming the acute angle with respect to the object to be inspected. In addition, the heights of the cracks may be more accurately determined by repeatedly scanning the object to be inspected while variously changing a moving direction of the second ultrasonic waves for the distribution direction of the cracks and updating the heights of the cracks to the highest amplitude values of diffracted wave components. In addition, when viewing a distribution image of the cracks and artificially turning a direction of the sensor at a right angle to the distribution direction of the cracks, the diffracted wave components may be easily acquired from the tips of the cracks. Therefore information on the heights of the cracks as well as a two-dimensional distribution of the cracks may be acquired from the diffracted wave components.

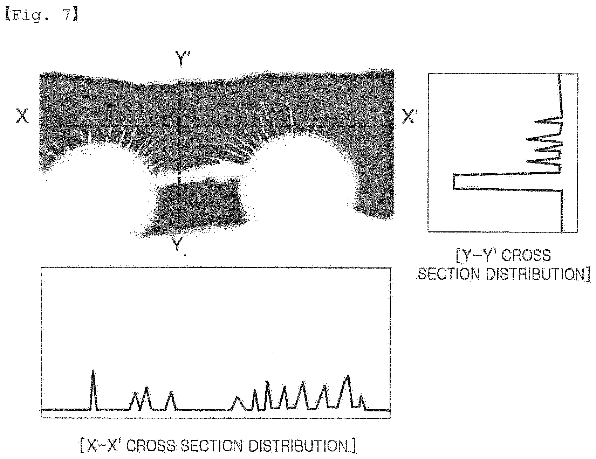

FIG. 7 is a view illustrating a distribution of cracks and heights of the cracks visualized using the crack measurement device and the crack measurement method according to an exemplary embodiment in the present disclosure.

As illustrated in FIG. 7, when cross lines of a horizontal axis and a vertical axis is designated, linear crack height information over a horizontal line and a vertical line may be represented by an X-X' cross section and a Y-Y' cross section in a two-dimensional cross-sectional form.

While exemplary embodiments have been shown and described above, it will be apparent to those skilled in the art that modifications and variations could be made without departing from the scope of the present invention as defined by the appended claims.

## Claims

1. A crack measurement device comprising:
an ultrasonic sensor irradiating a first ultrasonic wave in a direction perpendicular to a bottom surface of an object to be inspected, so as to be focused on the bottom surface of the object to be inspected, receiving a reflected wave of the first ultrasonic wave reflected from the bottom surface of the object to be inspected, transmitting a second ultrasonic wave in a direction forming an acute angle with respect to the bottom surface of the object to be inspected, so as to be diffused toward the bottom surface of the object to be inspected, and receiving a diffracted wave of the second ultrasonic wave diffracted by a crack; and
a monitoring unit extracting and providing information on whether or not the crack exists and a position of the crack on the basis of intensity of the reflected wave and extracting and providing information on a height of the crack using a time at which the diffracted wave is received.

2. The crack measurement device of claim 1, wherein the ultrasonic sensor includes:
a transmitter including a plurality of piezoelectric elements disposed in a concave structure and irradiating the first ultrasonic wave;
a receiver receiving the reflected wave; and
a partition wall disposed between the transmitter and the receiver and having sound absorption properties.

3. The crack measurement device of claim 1, further comprising a moving unit moving the ultrasonic sensor two-dimensionally on a surface of the object to be inspected and outputting position information indicating a position of the ultrasonic sensor to the monitoring unit.

4. The crack measurement device of claim 3, wherein the monitoring unit visually displays a two-dimensional distribution of the crack of the object to be inspected using the intensity of the reflected wave and the position information.

5. The crack measurement device of claim 3, wherein the moving unit is attached to the object to be inspected or a structure supporting the object to be inspected.

6. The crack measurement device of claim 5, further comprising a ferromagnetic substance attaching the moving unit to the object to be inspected or the structure supporting the object to be inspected.

7. The crack measurement device of claim 5, further comprising an adsorber adsorbed to the object to be inspected or the structure supporting the object to be inspected in a vacuum manner to attach the moving unit to the object to be inspected or the structure supporting the object to be inspected.

8. The crack measurement device of claim 5, further comprising a bolt fastened to the object to be inspected or the structure supporting the object to be inspected by a mechanical fastening method to attach the moving unit to the object to be inspected or the structure supporting the object to be inspected.

9. The crack measurement device of claim 1, further comprising a couplant supply device supplying a couplant between the ultrasonic sensor and the object to be inspected.

10. The crack measurement device of claim 9, wherein the couplant supply device includes:
a tank containing the couplant therein;
a pump continuously supplying the couplant;
a tube carrying the couplant supplied from the pump to a position in which the ultrasonic sensor is installed; and
a nozzle spraying the couplant carried through the tube and installed in the ultrasonic sensor.

11. The crack measurement device of claim 1, wherein the ultrasonic sensor includes:
a first transmitter transmitting the first ultrasonic wave;
a second transmitter disposed to be spaced apart from the first transmitter and transmitting the second ultrasonic wave; and
a receiver disposed to correspond to the first transmitter and receiving the reflected wave and the diffracted wave.

12. A crack measurement device comprising:
an ultrasonic sensor irradiating a first ultrasonic wave in a direction perpendicular to a bottom surface of an object to be inspected, so as to be focused on the bottom surface of the object to be inspected, and receiving a reflected wave of the first ultrasonic wave reflected from the bottom surface of the object to be inspected and a diffracted wave of the first ultrasonic wave diffracted by a crack; and
a monitoring unit extracting and providing information on whether or not the crack exists and a position of the crack on the basis of intensity of the reflected wave and extracting and providing information on a height of the crack using a time at which the diffracted wave is received.

13. The crack measurement device of claim 12, wherein the monitoring unit extracts and provides the information on the height of the crack using the time at which the diffracted wave is received.

14. The crack measurement device of claim 12, wherein the ultrasonic sensor includes:
a transmitter transmitting the first ultrasonic wave;
a first receiver disposed to correspond to the transmitter and receiving the reflected wave; and
a second receiver disposed to be spaced apart from the transmitter and receiving the diffracted wave.

15. A crack measurement method comprising:
irradiating a first ultrasonic wave in a direction perpendicular to a bottom surface of an object to be inspected, so as to be focused on the bottom surface of the object to be inspected;
receiving a reflected wave of the first ultrasonic wave reflected from the bottom surface of the object to be inspected;
irradiating a second ultrasonic wave in a direction forming an acute angle with respect to the bottom surface of the object to be inspected, so as to be diffused toward the bottom surface of the object to be inspected;
receiving a diffracted wave of the second ultrasonic wave diffracted by a crack; and
extracting and providing information on a height of the crack using a time at which the diffracted wave is received.

16. The crack measurement method of claim 15, wherein in the extracting and providing information comprises providing two-dimensional information on a distribution of the crack of the object to be inspected is visually displayed.

17. A crack measurement method comprising:
irradiating a first ultrasonic wave in a direction perpendicular to a bottom surface of an object to be inspected, so as to be focused on the bottom surface of the object to be inspected;
receiving a reflected wave of the first ultrasonic wave reflected from the bottom surface of the object to be inspected
extracting and providing information on whether or not a crack exists and a position of the crack on the basis of intensity of the reflected wave;
receiving a diffracted wave of the first ultrasonic wave diffracted by the crack; and
extracting and providing information on a height of the crack using a time at which the diffracted wave is received.
